# EUROPÄISCHE PATENTSCHRIFT

(11) **EP 0 441 801 B1**
(45) Veröffentlichungstag und Bekanntmachung des Hinweises auf die Patenterteilung: **01.09.1993**
(21) Anmeldenummer: 89911361.7
(22) Anmeldetag: 17.10.1989
(51) Int. Cl.: H01R 43/00, H02G 1/14

(54) **VORRICHTUNG ZUM AUFZIEHEN VON KNICKSCHUTZ- ODER FORMTÜLLEN AUF ELEKTRISCHE KABEL**
DEVICE FOR FITTING ANTIKINK PROTECTIVE SLEEVES OR MOULDED FERRULES ON ELECTRIC CABLES
DISPOSITIF PERMETTANT DE REVETIR DES CABLES ELECTRIQUES DE DOUILLES MOULEES OU DE GAINES DE PROTECTION ANTIFLEXION

(30) Priorität: 08.11.1988 DE 8813932 U
(43) Veröffentlichungstag der Anmeldung: 21.08.1991
(73) Patentinhaber: BRAUN, Reinhardt, 74564 Crailsheim (DE); HOPF, Andreas, D-74564 Crailsheim (DE)
(72) Erfinder: BRAUN, Reinhardt, 74564 Crailsheim (DE); HOPF, Andreas, D-74564 Crailsheim (DE)
(74) Vertreter: Müller, Hans, Dipl.-Ing.
(86) Internationale Anmeldenummer: DE8900656
(87) Internationale Veröffentlichungsnummer: WO9005396

(56) Entgegenhaltungen:
- DE-B- 1 065 492
- FR-A- 2 522 209
- GB-A- 1 444 245

## Beschreibung

### TECHNISCHES GEBIET

Die Erfindung betrifft eine Vorrichtung zum Aufziehen von Knickschutz- oder Formtüllen auf elektrische Kabel. Derartige Tüllen werden im Zusammenhang mit der elektrischen Stromversorgung bei praktisch allen elektrischen Geräten oder elektrischen Einrichtungen benötigt; die Tülle stellt dabei eine Versteifung eines Kabels an einer bestimmten Stelle dar und verhindert so, daß das Kabel an dieser Stelle abknicken und dadurch beschädigt werden kann. Derartige Tüllen sind sowohl an Kabeln für Starkstrom- als auch für Schwachstrom-Einrichtungen wie z. B. an Telefongeräten vorhanden.

Vorrichtungen dieser Art sind aus e.g GB-A-1 444 245, FR-A-2 522 209 und DE-B-1 065 492 bereits bekannt

Die Tüllen müssen an der vorbestimmten Stelle auf den elektrischen Kabeln stramm und unverrückbar sitzen. Sie bestehen aus einer Gummimischung, wobei ihre zentrische Durchbohrung dem Außendurchmesser des betreffenden elektrischen Kabels so angepaßt ist, daß die Tülle im aufgezogenen Zustand unverrückbar auf dem Kabel sitzt.

Die Erfindung gilt darüberhinaus für alle Arten von Tüllen bzw. Gummitüllen, also auch für Schlauchtüllen, Kabelschuhtüllen, Zugentlastungstüllen und ganz allgemein für Kabel- oder sonstige Durchführungen sowie für Gummi- oder sonstige Kappen.

### STAND DER TECHNIK

Das Aufziehen von Tüllen auf elektrische Kabel erfolgt mit Hilfe von sogenannten Dreidornzangen. Die drei Dorne einer derartigen Zange sind in gegenseitiger paralleler Ausrichtung an den beiden Zangenbacken befestigt. Durch Zusammendrücken der Zangengriffe können die Dorne unter Beibehaltung ihrer parallelen Lage voneinander wegbewegt werden. Zum Aufziehen einer Tülle auf ein Kabel ende werden die drei Dorne in die Tüllenbohrung hineingesteckt, durch Zusammenziehen der Zangengriffe die drei Dorne und damit die Tüllenbohrung in radialer Richtung auseinandergezogen, so daß das elektrische Kabel durch die nunmehr vergrößerte Innenbohrung der Tülle hindurchgeschoben werden kann. Anschließend werden die Zangengriffe losgelassen. Dabei zieht sich die Tülle in radialer Richtung wieder zusammen, wobei die Dorne zwischen der Tülle und dem Kabel eingepreßt werden. Das Herausziehen der Dorne aus dem Innenraum der Tülle erfordert einigen Kraftaufwand. Ein demgegenüber wesentlich größerer Kraftaufwand ist aber beim Aufspreizen der Dorne, d. h. beim Aufspreizen der Tülle erforderlich. Das Aufziehen von Tüllen gehört daher zu den Arbeiten, die nur kurzfristig und nicht über eine längere Zeitdauer hinweg durchgeführt werden können.

### DARSTELLUNG DER ERFINDUNG

Ausgehend von diesem vorbekannten Stand der Technik liegt der Erfindung die Aufgabe zugrunde, eine Möglichkeit zu schaffen, die es erlaubt, ohne größeren Kraftaufwand Tüllen auf elektrische Kabel aufzuziehen.

Diese Erfindung ist durch die Merkmale des Hauptanspruchs gegeben. Sie ist bei der eingangs genannten Vorrichtung zum Aufziehen von Knickschutz- oder Formtüllen auf elektrische Kabel gekennzeichnet durch einen langgestreckten Körper, dessen einer Endbereich als Büchse und dessen anderer Endbereich als Stab ausgebildet ist und bei dem die Längsachse der Büchse und die Längsachse des Stabes ineinanderfallen, wobei der Außendurchmesser dieses Stabes geringfügig kleiner als der Innendurchmesser der Tüllenlängsdurchbohrung ist und wobei der Innendurchmesser der Längsbohrung in der Büchse geringfügig größer ist als der Außendurchmesser des Kabels und wobei der Außendurchmesser der Tülle größer ist als der Außendurchmesser des Stabes, wobei die Oberflächen der beiden Endbereiche von Büchse und Stab allmählich ineinander übergehen. Ferner ist diese Vorrichtung gekennzeichnet durch einen ringförmigen Körper, dessen zentrische Durchbohrung im Durchmesser nur geringfügig größer ist als der jeweilige Durchmesser des langgestreckten Körpers längs dessen Längsachse, wobei der langgestreckte Körper und der ringförmige Körper so relativ zueinander, in Richtung der Längsachse des langgestreckten Körpers, bewegbar sind, daß der ringförmige Körper vollständig über den langgestreckten Körper überschiebbar ist. Damit kann auf die kraftaufwendige Greifbewegung beim Betätigen der Dreidornzange verzichtet werden, und es braucht stattdessen nur noch die Tülle auf einem langgestreckten Körper in Längsrichtung verschoben zu werden, was sich mit wesentlich weniger Kraftaufwand bewerkstelligen läßt. Das Verschieben relativ zum langgestreckten Körper erfolgt dabei mit Hilfe des ringförmigen Körpers, an dem sich die Tülle in Längsrichtung abstützen kann. Durch Verschieben des ringförmigen Körpers in Längsrichtung des stabförmigen Körpers verschiebt sich auch die Tülle.

Für die Relativbewegung des ringförmigen Körpers und des stabförmigen Körpers sind die vielfältigsten technischen Vorrichtungen einsetzbar. Eine für die Handhabung der erfindungsgemäßen Vorrichtung besonders vorteilhafte Weiterbildung der Erfindung zeichnet sich dadurch aus, daß Zug-Druck-Glieder vorhanden sind, an die der langgestreckte Körper und der ringförmige Körper so ankoppelbar sind, daß entweder der langgestreckte Körper durch den ringförmigen Körper hindurch- oder der ringförmige Körper über den langgestreckten Körper hinwegschiebbar sind. In vorteilhafter Weise kann dabei der langgestreckte Körper an zumindest einem Zug-Glied lösbar befestigt sein und der ringförmige Körper an der Tülle drückend anlegbar sein, so daß die Tülle über den langgestreckten Körper hinwegschiebbar ist.

Der für die Relativbewegung von langgestrecktem Körper bzw. Tülle und ringförmigem Körper erforderliche Kraftaufwand läßt sich in vorteilhafter Weise durch eine pneumatische Betätigung der Zug-Druck-Glieder wünschenswert klein halten.

Zur lösbaren Befestigung des langgestreckten Körpers an dem Zug-Glied ist nach einem weiteren Merkmal der Erfindung in dem einen Endbereich des langgestreckten Körpers eine zumindest in Teilbereichen ringförmige Hinterschneidung vorhanden, in die das zumindest eine Zug-Glied lösbar eingerastet werden kann.

Da der ringförmige Körper während der gesamten Verschiebung der Tülle an derselben drückend anliegt, muß sich mit dem Aufweiten der Tülle auch der ringförmige Körper aufweiten. Diese Aufweitung des ringförmigen Körpers läßt sich mit einfachen Hilfsmitteln dadurch bewerkstelligen, daß in der Wandung des ringförmigen Körpers zumindest ein, vorzugsweise mehrere in Längsrichtung sich erstreckende Schlitze vorhanden sind, die zumindest teilweise durch die Körperwandung in Längsrichtung hindurchreichen. Die in Längsrichtung auskragenden Zug-Glieder sind damit in zur Längsachse radialer Richtung nachgiebig gelagert. Um die freien Ende dieser Kragarme möglichst dicht bei der Längsachse und damit möglichst dicht auf der Oberfläche des langgestreckten Körpers positioniert zu halten, ist der ringförmige Körper in vorteilhafter Weise von einem in zumindest in Teilbereichen ringförmig umgebenden elastischen Zug-Glied umgeben. Dieses Zug-Glied kann in technisch einfacher Weise durch eine Schraubenfeder konstruktiv verwirklicht werden.

### KURZE BESCHREIBUNG DER ZEICHNUNG

Die Erfindung wird im folgenden anhand des in der Zeichnung dargestellten Ausführungsbeispiels näher beschrieben und erläutert. Es zeigen:
- Fig. 1: ein elektrisches Kabel mit aufgezogener Tülle,
- Fig. 2: einen Längsschnitt durch den zu der erfindungsgemäßen Vorrichtung gehörenden langgestreckten Körper, auf dessen eines Ende eine Tülle aufgesteckt und in dessen anderes Ende das Ende des in Fig. 1 dargestellten elektrischen Kabels eingesteckt werden kann,
- Fig. 3: den langgestreckten Körper mit aufgesteckter Tülle und eingestecktem Kabel gemäß Fig. 2, mit dem ringförmigen Körper,
- Fig. 4: den in Längsrichtung schiebend an der Tülle anliegenden ringförmigen Körper und
- Fig. 5: eine perspektivische Schrägansicht der Vorrichtung nach Fig. 4.

### WEGE ZUR AUSFÜHRUNG DER ERFINDUNG

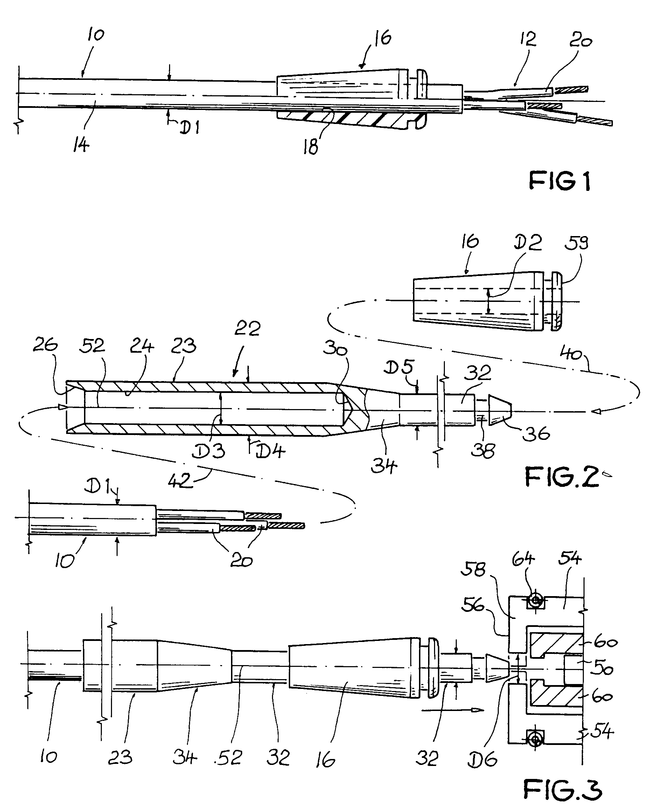

Von einem elektrischen Kabel 10 ist in dessem in der Zeichnung rechten Endbereich 12 der Kabelmantel 14 entfernt vorhanden. Auf dem an den Endbereich 12 sich anschließenden Mantelbereich 14 ist eine Tülle 16 aufgeschoben vorhanden. Der Durchmesser D2 der durch die Tülle 16 hindurchreichenden Längsbohrung 18 ist dem Außendurchmesser D1 des Kabels 10 angepaßt, so daß im aufgezogenen Zustand - wie in Fig. 1 dargestellt - die Tülle 16 stramm auf dem elektrischen Kabel 10 aufsitzt. In dem Endbereich 12 sind die einzelnen Litzen 20 des elektrischen Kabels 10 freiliegend vorhanden.

Zu der erfindungsgemäßen Vorrichtung gehört ein Formstück 22. Dieses Formstück 22 besitzt die Gestalt eines langgestreckten Körpers. In seinem einen - in Fig. 2 linken - Endbereich besitzt das Formstück 22 eine büchsenförmige Gestalt 23 mit einem Außendurchmesser D4. Die Innenbohrung 24 des Formstücks 22 weist den Durchmesser D3 auf. Das - in Fig. 2 linke - offene Ende des Formstücks 22 besitzt eine konische Anschrägung 26. Die Bohrung 24 ist innerhalb des Formstückes 22 durch eine Stirnfläche 30 verschlossen. Im Bereich zwischen der konischen Anschrägung 26 und der Stirnfläche 30 besitzt das Formstück 22 damit die Form einer Büchse 23.

Das andere - in Fig. 2 rechte - Ende des Formstücks 22 besitzt eine kreiszylindrische, stabförmige Gestalt 32 mit dem Außendurchmesser D5. Der Übergang der zylindrischen Oberflächengestalt mit dem Durchmesser D4 zu dem zylindrischen Oberflächenbereich mit dem Durchmesser D5 erfolgt allmählich in einem konisch sich - in Fig. 2 von links nach rechts - verjüngenden Oberflächenbereich 34.

Das rechte freie Ende des stabförmigen Bereiches 32 des Formstückes 22 ist mit einer Spitze 36 versehen. Hinter der Spitze ist in den Stab 32 eine ringförmige Nut 38 eingeformt.

Auf dem Bereich des Stabes 32 läßt sich aus Richtung 40 die Tülle 16 leicht aufschieben. Der Durchmesser D5 des Stabes 32 ist dementsprechend etwas geringer als der Innendurchmesser D2 der Längsbohrung 18 der Tülle 16 ausgebildet.

In die Bohrung 24 des Formstücks 22 läßt sich aus Richtung 42 das Kabel 10 mit seinen freiliegenden Litzen 20 einschieben. Diese Einschubbewegung wird durch die konische Anschrägung 26 des Formstücks 22 erleichtert. Das Kabel läßt sich so weit in die Bohrung 24 einschieben, bis seine Litzen an der Stirnfläche 30 der Bohrung 24 zur Anlage kommen. Der Durchmesser D3 der Bohrung 24 ist geringfügig größer als der Außendurchmesser D1 des elektrischen Kabels 10, so daß diese Einschubbewegung ohne größeren Kraftaufwand erfolgen kann.

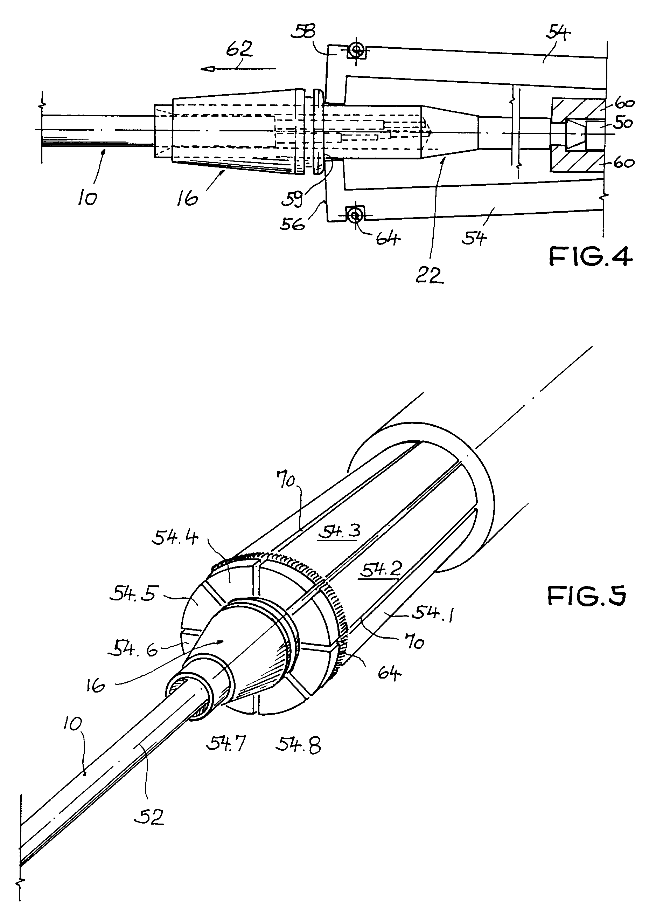

Zum Verschieben der Tülle 16 längs des Formstückes 22 werden die Längsachse 52 des Formstücks 22 umgebende Schubarme 54 einer Zug-Druck vorrichtung verwendet, die mit entsprechend ausgebildeten Anlageflächen 56 drückend an die - in der Zeichnung rechte - Stirnseite 59 der Tülle 16 angelegt werden können (Fig. 3, 4 und 5). Die Schubarme 54 besitzen dazu eine vordere Abwinklung 58, die zwischen sich einer Abstand D6 freilassen. Der Abstand D6 entspricht dabei dem Durchmesser eines Kreises. D6 ist geringfügig größer als der Durchmesser D5 des Stabes 32, so daß das Formstück 22 mit seinem Stab 32 durch den Bereich D6 - in der Fig. 3 nach rechts - hindurchgeschoben werden kann. Bei diesem Hindurchschieben des Formstückes 22 durch den Bereich der Abwinklung 58 hindurch kommt schließlich die Spitze 36 des Formstücks 22 an einem Anschlag 50 der Zug-Druck vorrichtung zur Anlage. Dabei rasten dann Greifarme 60 der Zug-Druck vorrichtung, die ebenfalls im Abstand radial um die Längsachse 52 vorhanden sind, in der Nut 38 ein. Das Formstück 22 ist damit an den Greifarmen 60 zugfest angekoppelt (Fig. 4). Durch Längsverschieben der Schubarme 54 relativ zu den Greifarmen 60 - in Fig. 4 nach links - kommen die Abwinklungen 58 der Schubarme 54 an der Stirnseite 59 der Tülle 16 zur Anlage, und bei einer entsprechend weiteren Schubbewegung der Schubarme 54 wird die Tülle 16 in Richtung 62, in den Bereich mit dem Durchmesser D4 des Formstücks 22 verschoben. Dabei weitet sich die Tülle 16 mit ihrer Längsbohrung 18 weiter auf, als es dem Maß D1 des elektrischen Kabels 10 entspricht.

Die Schubarme 54 lassen sich so weit in Richtung 62 relativ zu den Greifarmen 60 verfahren, daß die Tülle über das in der Zeichnung linke Ende des Formstücks 22 hinweggeschoben werden kann. Nach dem Verlassen des Formstücks 22 kommt die Tülle 16 damit auf dein Kabel 10 zu liegen, so wie es in Fig. 1 dargestellt ist. Das Kabel 10 läßt sich dann mit aufsitzender Tülle 16 in Richtung 62 aus dem Formstück 22 herausziehen.

Anschließend wird das Formstück 22 von den Greifarmen 60 entkoppelt, was beispielsweise durch geringfügiges Verfahren der Greifarme 60 quer zur Längsachse 52 erfolgen kann. Nach Zurückfahren der Schubarme 54 in die in Fig. 3 dargestellte Position, kann eine neue Tülle 16 auf das Formstück 22 aufgeschoben und dann auf ein entsprechendes neues Kabel 10 aufgeschoben werden.

Um die Schubarme 54 immer in engem Abstand zueinander zu halten, ist in dem vorderen, dem Bereich der Abwinklung 58 benachbarten Bereich eine Schraubenfederwendel 64 vorhanden, die die Schubarme 54 ringförmig umgibt. Beim Verschieben der Schubarme 54 in Richtung 62 über das Formstück 22 hinweg, gleiten die Abwinklungen 58 der mehreren Schubarme 54 auf der Oberfläche des Formstücks 22 entlang und können so während ihres gesamten Verschiebeweges längs des Formstückes 22 an der Stirnseite 59 der Tülle 16 anliegen.

Die Schubarme 54 sind zu mehreren vorhanden und sind parallel zur Längsachse 52 durch Spalte 70 voneinander getrennt. Die einzelnen Schubarme 54.1, 54.2, 54.3, 54.4, 54.5, 54.6, 54.7, 54.8 sind damit in Form von Kragarmen ausgebildet, wobei die jeweilige Abwinklung 58 eines jeden Schubarmes 54 das auskragende freie Ende derselben darstellt (Fig. 5). Zwischen benachbarten Schubarmen 54 ist ein Spalt 70 vorhanden, der je nach Stellung der Schubarme, d.h. nach Abstand derselben, von der Längsachse 52, unterschiedlich breit ist.

Das Verfahren der Schubarme 54 kann mittels entsprechender Hebelübersetzungen ohne großen Kraftaufwand erfolgen. Ein besonders kraftschonendes Verschieben erfolgt mit Hilfe von pneumatisch beaufschlagbaren Zwei-Wege-Zylindern; Druckluft ist in den gewerblichen Betrieben regelmäßig vorhanden.

Das Ankoppeln des Formstücks 22 an den Greifarmen 60 braucht nicht in der dargestellten Weise zu erfolgen. Das Ankoppeln kann beispielsweise auch durch einen bajonettartigen Verschluß bewerkstelligt werden, der durch entsprechendes Verdrehen um die Längsachse 52 des Formstücks 22 ein- bzw. ausgerastet werden kann.

Statt die Schubarme 54 zu bewegen, können auch die Greifarme 60, relativ zu den Schubarmen 54, verschoben werden. Wichtig ist nur eine Relativbewegung zwischen dem Formstück 22 und der Anlagefläche 56.

Die Gleitbewegung der Tülle 16 längs des Formstücks 22 kann durch Aufbringen von Gleitmitteln wie z. B. Vaseline oder Talkumpuder erleichtert werden.

## Patentansprüche

1. Vorrichtung zum Aufziehen von Knickschutz- oder Formtüllen (16) auf elektrische Kabel (10),
**gekennzeichnet durch**
- einen langgestreckten Körper (22),
-- dessen einer Endbereich als Büchse (23) und
-- dessen anderer Endbereich als Stab (32) ausgebildet ist,
-- bei dem die Längsachse (52) der Büchse (23) und die Längsachse (52) des Stabes (32) ineinanderfallen,
-- bei dem der Außendurchmesser (D5) des Stabes (32) geringfügig kleiner als der Innendurchmesser (D2) der Tüllenlängsdurchbohrung (18) ist,
-- bei dem der Innendurchmesser (D3) der Längsbohrung (24) in der Büchse (23) geringfügig größer ist als der Außendurchmesser (D1) des Kabels (10),
-- bei dem der Außendurchmesser (D4) der Büchse (23) größer ist als der Außendurchmesser (D5) des Stabes (32),
-- bei dem die Oberflächen der beiden Endbereiche allmählich (34) ineinander übergehen, sowie
- einen ringförmigen Körper (58),
-- dessen zentrische Durchbohrung im Durchmesser (D6) nur geringfügig größer ist als der jeweilige Durchmesser (D4, D5) des langgestreckten Körpers (22) längs dessen Längsachse (52),
- wobei der langgestreckte Körper (22) und der ringförmige Körper (58) relativ zueinander, in Richtung der Längsachse (52) des langgestreckten Körpers, bewegbar sind, so daß der ringförmige Körper (58) vollständig über den langgestreckten Körper (22) überschiebbar ist.

2. Vorrichtung nach Anspruch 1,
**dadurch gekennzeichnet,** daß
Zug-Druck-Glieder (54, 60) vorhanden sind, an die der langgestreckte Körper (22) und der ringförmige Körper (58) so ankoppelbar sind, daß entweder der langgestreckte Körper (22) durch den ringförmigen Körper (58) hindurch oder der ringförmige Körper (58) über den langgestreckten Körper (22) hinwegschiebbar ist.

3. Vorrichtung nach Anspruch 2,
**dadurch gekennzeichnet,** daß
der langgestreckte Körper (22) an zumindest einem Zug-Glied (60) lösbar befestigt ist und der ringförmige Körper (58) von zumindest einem Druck-Glied (54) über den langgestreckten Körper (22) hinwegschiebbar ist.

4. Vorrichtung nach Anspruch 3,
**dadurch gekennzeichnet,** daß
in dem einen Endbereich des langgestreckten Körpers (22) eine zumindest in Teilbereichen ringförmige Hinterschneidung (38) vorhanden ist, in die das zumindest eine Zugglied (60) lösbar einrastbar ist.

5. Vorrichtung nach Anspruch 2,
**dadurch gekennzeichnet,** daß
die Zug-Druck-Glieder (54, 60) pneumatisch betätigbar sind.

6. Vorrichtung nach Anspruch 1,
**dadurch gekennzeichnet,** daß
in der Wandung des ringförmigen Körpers (58) zumindest ein in Längsrichtung sich erstreckender Schlitz (70) vorhanden ist, der zumindest teilweise durch die Körperwandung in Längsrichtung hindurchreicht.

7. Vorrichtung nach Anspruch 6,
**dadurch gekennzeichnet,** daß
der ringförmige Körper (58) von einem ihn zumindest in Teilbereichen ringförmig umgebenden elastischen Zugglied (64) umgeben ist.

8. Vorrichtung nach Anspruch 7,
**dadurch gekennzeichnet,** daß
das Zugglied eine Schraubenfeder (64) ist.

## Claims

1. Device for pulling buckling-protection sleeves or moulded sleeves (16) onto electrical cables (10), characterised in that by an elongated body (22) whose one end region is constructed as a bush (23) and whose other end region is constructed as a rod (32), in the case of which body the longitudinal axis (52) of the bush (23) and the longitudinal axis (52) of the rod (32) coincide, in the case of which body the external diameter (D5) of the rod (32) is slightly smaller than the internal diameter (D2) of the sleeve longitudinal hole (18), in the case of which body the internal diameter (D3) of the longitudinal hole (24) in the bush (23) is slightly larger than the external diameter (D1) of the cable (10), in the case of which rod the external diameter (D4) of the bush (23) is larger than the external diameter (D5) of the rod (32), in the case of which rod the surfaces of the two end regions merge gradually (34) into one another, and characterised by an annular body (58) whose central hole is only slightly larger in diameter (D6) than the respective diameters (D4, D5) of the elongated body (22) along its longitudinal axis (52), the elongated body (22) and the annular body (58) being movable relative to one another in the direction of the longitudinal axis (52) of the elongated body such that the annular body (58) can be pushed completely over the elongated body (22).

2. Device according to Claim 1, characterised in that tension-compression elements (54, 60) are provided to which the elongated body (22) and the annular body (58) can be coupled such that either the elongated body (22) can be pushed through the annular body (58) or the annular body (58) can be pushed over the elongated body (22).

3. Device according to Claim 2, characterised in that the elongated body (22) is detachably mounted on at least one tension element (60) and the annular body (58) can be pushed over the elongated body (22) by at least one compression element (54).

4. Device according to Claim 3, characterised in that an undercut (38), which is annular at least in sub-regions, is provided in the one end region of the elongated body (22), into which undercut (38) the at least one tension element (60) can be detachably latched.

5. Device according to Claim 2, characterised in that the tension-compression elements (54, 60) can be operated pneumatically.

6. Device according to Claim 1, characterised in that at least one slot (70), which extends in the longitudinal direction, is provided in the wall of the annular body (58), which slot (70) passes at least partially through the body wall in the longitudinal direction.

7. Device according to Claim 6, characterised in that the annular body (58) is surrounded by an elastic tension element (64) which at least partially surrounds said annular body (58) in an annular manner, at least in sub-regions.

8. Device according to Claim 7, characterised in that the tension element is a helical spring (64).

## Revendications

1. Dispositif de montage de douilles moulées ou de protection contre le pliage (16) sur des câbles électriques (10),
caractérisé par
- un corps allongé (22)
- dont une partie d'extrémité présente la forme d'une douille (23) et
- dont l'autre part d'extrémité présente la forme d'un barreau (32),
- dans lequel l'axe longitudinal (52) de la douille (23) et l'axe longitudinal (52) du barreau (32) coïncident,
- dans lequel le diamètre extérieur (D5) du barreau (32) est légèrement plus petit que le diamètre intérieur (D2) de l'alésage longitudinal traversant la douille (19),
- dans lequel le diamètre intérieur (D3) de l'alésage longitudinal (24) de la douille (23) est légèrement plus grand que le diamètre extérieur (D1) du câble (10),
- dans lequel le diamètre extérieur (D4) de la douille (23) est supérieur au diamètre extérieur (D5) du barreau (32),
- dans lequel les surfaces des deux parties d'extrémité se raccordent progressivement (34) l'une à l'autre,
ainsi que par
- un corps annulaire (58),
- dont le diamètre (D6) de l'alésage axial n'est que légèrement plus grand que le diamètre (D4, D5) que présente le corps allongé (22) le long de son axe longitudinal (52),
- le corps allongé (22) et le corps annulaire (58) pouvant être déplacés l'un par rapport à l'autre suivant la direction de l'axe longitudinal (52) de sorte que le corps annulaire (58) puisse glisser complètement sur le corps allongé (22).

2. Dispositif selon la revendication 1, caractérisé en ce qu'il existe des éléments de traction et de poussée (54, 60) auxquels le corps allongé (22) et le corps annulaire (58) peuvent être accouplés de telle sorte que le corps annulaire (58) puisse être glissé le long du corps allongé (22) ou que le corps annulaire (58) puisse être glissé sur le corps allongé (22).

3. Dispositif selon la revendication 2, caractérisé en ce que le corps allongé (22) est fixé de manière amovible à au moins un élément de traction (60) et en ce que le corps annulaire (58) puisse être écarté par glissement du corps allongé (22) par au moins un élément de poussée (54).

4. Dispositif selon la revendication 3, caractérisé en ce que dans une des parties d'extrémité du corps allongé (22) il existe une contre-dépouille (38) au moins partiellement annulaire dans laquelle le ou les éléments de traction (60) peuvent s'accrocher de manière amovible.

5. Dispositif selon la revendication 2, caractérisé en ce que les éléments de traction et de poussée (54, 60) peuvent être actionnés pneumatiquement.

6. Dispositif selon la revendication 1, caractérisé en ce que dans la paroi du corps annulaire (58) existe au moins une fente (70) s'étendant dans la direction longitudinale du corps annulaire (58) et traversant au moins partiellement la paroi du corps annulaire (58) dans le sens de la longueur de celui-ci.

7. Dispositif selon la revendication 6, caractérisé en ce que le corps annulaire (58) est entouré par un élément de traction (64) élastique qui l'entoure au moins partiellement en forme d'anneau.

8. Dispositif selon la revendication 7, caractérisé en ce que l'élément de traction est un ressort hélicoïdal (64).
